(19) Europäisches Patentamt
European Patent Office
Office européen des brevets

(11) **EP 0 696 354 B1**

(12) **EUROPEAN PATENT SPECIFICATION**

(45) Date of publication and mention
of the grant of the patent:
**05.03.1997 Bulletin 1997/10**

(21) Application number: **94915127.8**

(22) Date of filing: **25.04.1994**

(51) Int Cl.⁶: **G01N 23/12**

(86) International application number:
**PCT/EP94/01320**

(87) International publication number:
**WO 94/25859 (10.11.1994 Gazette 1994/25)**

(54) **FLUID COMPOSITION METER**

GERÄT ZUR MESSUNG DER ZUSAMMENSETZUNG EINES FLIESSFÄHIGEN MEDIUMS

APPAREIL DE MESURE DE LA COMPOSITION D'UN FLUIDE

(84) Designated Contracting States:
**DE DK GB NL**

(30) Priority: **26.04.1993 EP 93201196**

(43) Date of publication of application:
**14.02.1996 Bulletin 1996/07**

(73) Proprietor: **SHELL INTERNATIONALE RESEARCH MAATSCHAPPIJ B.V.**
**2596 HR Den Haag (NL)**

(72) Inventor: **SCHEERS, Alexander, Meijnhart**
**NL-2288 GD Rijswijk (NL)**

(74) Representative:
**Zeestraten, Albertus Wilhelmus Joannes et al**
**Shell International B.V.,**
**Intellectual Property Services,**
**P.O. Box 384**
**2501 CJ The Hague (NL)**

(56) References cited:
**EP-A- 0 187 460**          **EP-A- 0 236 623**
**EP-A- 0 269 432**          **WO-A-93/10439**
**US-A- 3 794 836**

• **INTERNATIONAL JOURNAL OF APPLIED RADIATION AND ISOTOPES, vol.34, no.1, January 1983, OXFORD GB pages 309 - 331 J. S. WATT**

## Description

The invention relates to an apparatus for measuring a composition of a fluid flowing through a flowline. When a multi-component fluid is transported through a flowline to a processing facility, it is generally required to measure the composition of the fluid either at a location along the flowline or at the upstream end thereof. In the oil and gas industry, wellbore fluids can be transported from an onshore or offshore wellhead through a flowline to a processing facility where the different components of the fluid are separated from each other. The wellbore fluids can include oil, gas and water in fractions which can vary in time and can be different for different wells producing from the same subsurface reservoir. Measurement of fluid composition directly at the wellheads or further downstream where streams from different wells are joined enables specific reservoir characteristics to be updated during the producing lifetime of the reservoir, and allows timely corrective measures to be taken if necessary.

European patent No. 269 432 discloses an apparatus for measuring a composition of a fluid flowing through a flowline, comprising a conduit suitable to be connected to the flowline in a manner that a stream of said fluid flows through a conduit, a radioactive source arranged so that radiation from the source passes through a wall of the conduit and through the stream of fluid, a radiation detector arranged so as to detect said radiation passing through the wall of the conduit and through the stream of fluid, and means to generate a signal representative of said radiation detected by the detector. The amount of radiation passing through the stream of fluid and which is detected by the detector provides an indication of the composition of the fluid. The wall of the conduit through which radiation passes forms a radiation window made of beryllium, which wall is surrounded by a tubular guard provided with diametrically opposed holes for passage of the radiation. A drawback of the known device is that toxic beryllium oxide will form on the surface of the beryllium wall. Furthermore, for high pressure applications a relatively thick beryllium wall is required, resulting in a significant attenuation of radiation in the beryllium wall and a corresponding reduction of accuracy of the composition measurement.

It is an object of the present invention to provide an apparatus for measuring a fluid composition of a stream of multi-component fluid, which overcomes the drawbacks of the prior art apparatus.

It is another object of the invention to provide an apparatus for measuring a fluid composition of a stream of multi-component fluid, which apparatus is compact and provides accurate measurements.

In accordance with the present invention the apparatus for measuring a composition of a stream of fluid flowing through a flowline is characterized in that the detector comprises a solid state detector configuration with at least two detection surfaces and a filter which is located between the radiation source and a first of said detection surfaces.

In general, the efficiency of a solid state detector decreases with increasing radiation energy level. If for example an Americium (Am-241) radiation source is used which radiates at a low energy level of 18 KeV and at a high energy level of 60 KeV, the detector efficiency at the low energy radiation level is about 50-60%, while the detector efficiency at the high energy radiation level is about 5%. In the apparatus according to the invention the efficiency of the detector is improved by providing a solid state detector configuration with at least two radiation detecting surfaces, whereby a filter is located between the radiation source and a first of said detecting surfaces.

Preferably, the filter substantially prevents the low energy radiation to pass therethrough, and substantially allows the high energy level radiation to pass therethrough. Thereby it is achieved that the low energy level portion of the radiation passing through the fluid mixture and the wall of the conduit is substantially detected by a second of said two detecting surfaces. Furthermore, the high energy level portion of the radiation which passes through the fluid mixture and the wall of the conduit is substantially detected by said first detecting surface at an increased efficiency since by the arrangement of the filter the count-rate for the high energy level portion is significantly increased. Preferably the filter comprises Copper.

It is to be understood that in the context of the present invention the term solid state detector refers to a semiconductor diode detector, for example as described in publication ISBN 0-471-49545-x entitled "Radiation detection and measurement", chapter 11. Such a detector is compact and has a high resolution in the energy range between 15-100 keV which is suitable for the measurement. The resolution and efficiency of the semiconductor diode detector can be increased by providing the detector with cooling means which maintain the temperature of the detector between 0-15 °C, or preferably between 5-10 °C.

A suitable cooling means forms a Peltier element since such element is compact, whereby the compactness of the apparatus is even enhanced when the detector is directly attached to the Peltier element.

It is preferred that the wall of the conduit comprises a fibre reinforced resin. It has been found that the wall of fibre reinforced resin forms an adequate radiation window with low radiation absorption, while such a wall allows relatively high internal pressures to be applied. Furthermore, in the absence of beryllium there is no danger that beryllium oxide will form, and future problems of disposing beryllium are eliminated.

Absorption of radiation in the conduit wall is particularly low when the wall is reinforced with carbon fibres. In view thereof it is preferred that the wall comprises a relatively high percentage of carbon fibres, for example between 50-70% wt carbon fibres.

A suitable matrix material to be applied for the wall forms a polyether resin, such as an epoxy resin.

The composition of the fluid flowing through the flowline is determined from the signal representing the radiation detected by the detector according to the invention in accordance with the following method:

The absorption of gamma rays in matter is described by the following equation:

$$I(e) = I_o(e).exp(-\mu(e).h,$$

where

$I_o(e)$ = initial intensity of the gamma rays at energy e;
$I(e)$ = intensity of the gamma rays after absorption at energy e;
$\mu(e)$ = linear absorption coefficient at energy e;
h = thickness of material.

Given an oil/water/gas mixture in a pipe of internal diameter d and wall thickness t, the following equations can be derived for two energy levels e1 and e2:

$$I(e1) = I_o(e1).exp(-\mu_{mix}(e1).d).exp(-\mu_{pipe}(e1).2t)$$

and

$$I(e2) = I_o(e2).exp(-\mu_{mix}(e2).d).exp(-\mu_{pipe}(e2).2t),$$

where

$$\mu_{mix}(e1) = \mu_{oil}(e1).\alpha_{oil} + \mu_{water}(e1).\alpha_{water} + \mu_{gas}(e1).\alpha_{gas}$$

and

$$\mu_{mix}(e2) = \mu_{oil}(e2).\alpha_{oil} + \mu_{water}(e2).\alpha_{water} + \mu_{gas}(e2).\alpha_{gas}$$

The symbol $\alpha$ refers to the volume fraction of the subscripted phase; the sum of all the three fractions should be equal to 1:

$$\alpha_{oil} + \alpha_{water} + \alpha_{gas} = 1$$

if the absorption coefficients for oil, water and gas are measured in separate calibration procedure, then, by measuring the radiation absorption through a pipeline filled with oil, water and gas, at two gamma-ray energy levels e1 and e2 the three fractions $\alpha_{oil}$, $\alpha_{water}$ and $\alpha_{gas}$ can be determined using the above equations.

It is observed that the International Journal of Applied Radiation and Isotopes, Vol. 34, No. 1, January 1982, discloses on pages 309-331 that a solid state detector which is cooled by a Peltier element can be used in an apparatus for on-stream analysis of metalliferous ore slurries, that European patent specification No. 0 187 460 discloses the use of several gamma ray detectors for measuring the composition of a multiphases fluid stream in a flowline along several chords and that European patent specification 0 236 623 discloses the use of a single radiation detector together with a differential pressure gauge in a multiphase flowmeter.

The invention will now be described by way of example in more detail with reference to the drawings in which:

Fig. 1 shows schematically a longitudinal cross-section of the apparatus according to the invention;
Fig. 2 shows cross-section 2-2 of the apparatus of Fig. 1;

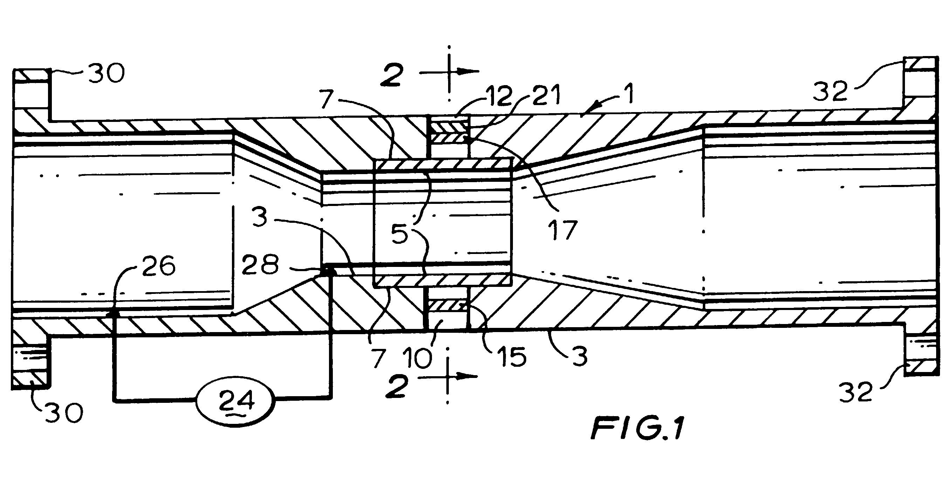

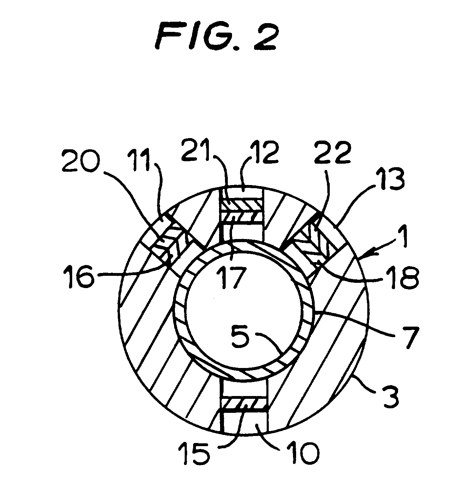

The apparatus of Figs. 1 and 2 includes a steel conduit 1 having a central part 3 of reduced internal diameter. A carbon fibre reinforced epoxy (CFRE) cylinder 5 is located in a recess 7 provided at the inside of the central part 3 of the conduit 1. The wall of the central part 3 of the conduit 1 is provided with four openinqs 10, 11, 12, 13, whereby openings 11, 12, 13 are arranged opposite opening 10 and at spaced intervals along the circumference of the conduit 1. Each opening 10, 11, 12, 13 extends from the outer surface of the conduit 1 to the outer surface of the CFRE cylinder 5.

An X-ray or gamma-ray radiation source 15 is located in opening 10 which forms a collimator for the source 15. Three solid state detectors 16, 17, 18 are located in openings 11, 12, 13 respectively, which openings 11, 12, 13 form respective collimators for the detectors 16, 17, 18 so that the latter can detect radiation from the source 15. The detectors 16, 17, 18 are attached to respective Peltier elements 20, 21, 22 which serve to maintain the temperature of the detectors 16, 17, 18 between 5-10 °C. An electronic processor (not shown) is linked to the detectors 16, 17, 18 to receive and process signals representing the radiation detected by the detectors 16, 17, 18.

The radioactive source 15 is selected such that suitable energy levels e1 and e2 are emitted so that $\alpha_{oil}$, $\alpha_{water}$ and $\alpha_{gas}$ can be solved using the above equations.

A differential pressure meter 24 is connected to a pressure tap 26 located at the inner surface of the conduit 1 adjacent the central part 3 thereof, and to a pressure tap 28 located at the inner surface of the central part 3 of the conduit 1. The conduit 1 is at both ends provided with flanges 30, 32 to connect the conduit 1 to a flowline (not shown) for transporting fluid containing oil, water and gas produced from a wellbore in an earth formation.

During normal operation of the apparatus shown in Figs. 1 and 2, the conduit 1 is connected to the flowline and a stream of fluid containing oil, water and gas produced from the wellbore flows through the conduit 1. X-ray or gamma-ray radiation emitted by radiation source 15 passes through the wall of the carbon fibre reinforced cylinder 5 and through the stream of fluid towards the detectors 16, 17, 18, whereby the radiation is partly absorbed by the wall of the CFRE cylinder 5 and by the stream of fluid. Thus, the radiation emitted by the source 15 is attenuated by the wall of the CFRE cylinder 15 and by the stream of fluid. The attenuated radiation is detected by the detectors 16, 17, 18 and signals representing the attenuated radiation are received by the electronic processor which determines the composition of the fluid using the above equations. Furthermore, the differential pressure meter 24 provides signals representing the flow rate of the fluid mixture, so that the flowrates of the individual fluid components can be calculated.

Application of several detectors at circumferentially spaced locations around the conduit has the advantage, compared to applying only one detector, that the count-rate is thereby increased and that the homogeneity of the fluid can be checked by comparing the fluid composition as determined from the individual detectors. In the embodiment shown in Figs. 1 and 2 three detectors are applied, however less or more than three detectors can be applied in the apparatus according to the invention depending on the characteristics of the application.

A suitable material for constructing a CFRE cylinder for use in the apparatus described with reference to Figs. 1 and 2 comprises Araldit LY556 resin with HY917 hardener and DY070 hardening accelerator manufactured by Ciba Geigy, and Tenax IM-400-12000 carbon fibres manufactured by AKZO. A CFRE cylinder was constructed from this material with an internal diameter of 43 mm and a wall-thickness of 2mm, and was positioned within a steel conduit provided with one 16 mm diam opening and three 8 mm diam openings for locating the radiation source and the three detectors respectively. A pressure test revealed that the CFRE cylinder could withstand an internal pressure of 120 MPa.

To reduce attenuation of the radiation in the wall of the conduit, in an alternative embodiment of the apparatus according to the invention at least one of the source and the detector is arranged within the conduit.

In such embodiment, it is preferred that the source is arranged within the conduit and the detector is arranged outside the conduit. Thus the radiation passes through the wall of the conduit only once. Suitably the source is surrounded by a sleeve located within the conduit, which sleeve preferably is arranged concentrically within the conduit.

## Claims

1. An apparatus for measuring a composition of a fluid flowing through a flowline, comprising a conduit (5) suitable to be connected to the flowline in a manner that a stream of said fluid flows through the conduit (5), a radioactive source (15) arranged so that radiation from the source (15) passes through a wall of the conduit (5) and through the stream of fluid, a radiation detector arranged so as to detect said radiation passing through the wall of the conduit (5) and through the stream of fluid, and means to generate a signal representative of said radiation detected by the detector, characterized in that the detector comprises a solid state detector configuration (16, 17, 18) which is provided with at least two radiation detection surfaces and a filter which is located between the radiation source (15) and a first of said detection surfaces.

2. The apparatus of claim 1, wherein the filter substantially prevents the low energy radiation and allows the high energy radiation to pass therethrough.

3. The apparatus of claim or 2, wherein the filter comprises copper.

4. The apparatus of claim 1, 2 or 3, wherein the solid state detector configuration (16, 17, 18) is provided with cooling means (20, 21, 22) so as to maintain the temperature of the solid state detector configuration (16, 17, 18) between 0-15 °C.

5. The apparatus of claim 4, wherein the solid state detector configuration (16, 17, 18) is provided with cooling means (16, 17, 18) so as to maintain the temperature of the solid state detector configuration between 5-10 °C.

6. The apparatus of claim 4 or 5, wherein the cooling means (20, 21, 22) is in the form of a Peltier element.

7. The apparatus of claim 6, wherein the detector configuration (16, 17, 18) is directly attached to the Peltier elements (20, 21, 22).

8. The apparatus of any one of claims 1-7, wherein said flowline (1) has along a part of its length a reduced diameter, and the apparatus further comprises means (24) for measuring a differential pressure in the stream of fluid flowing through the part of reduced diameter.

9. The apparatus of any of claims 1-8, wherein at least one of the source (15) and the solid state detector configuration (16, 17, 18) is arranged within the conduit (5).

10. The apparatus of claim 9, wherein the source (15) is arranged within the conduit (5) and the solid state detector configuration (16, 17, 18) is arranged outside the conduit (5).

11. The apparatus of any one of claims 1-10, wherein the solid state detector configuration (16, 17, 18) comprises a plurality of solid state detectors (16, 17, 18) which are arranged at circumferentially spaced locations around the conduit (5).

12. The apparatus of any one of claims 1-11, wherein the wall of the conduit (5) comprises a fibre reinforced resin.

13. The apparatus of claim 12, wherein the wall of the conduit (5) comprises a carbon fibre reinforced resin.

14. The apparatus of claim 12 or 13, wherein said resin comprises a polyether resin.

15. The apparatus of claim 14, wherein said polyether resin comprises an epoxy resin.

16. The apparatus of any one of claims 11-14, wherein the wall of the conduit (5) comprises a relatively high percentage of carbon fibres.

**Patentansprüche**

1. Vorrichtung zum Messen einer Zusammensetzung eines durch eine Leitung strömenden Fluids mit einer Röhre (5), die sich zum Anschluß an die Leitung auf eine derartige Weise eignet, daß ein Strom des Fluids durch die Röhre (5) strömt, einer radioaktiven Quelle (15), die so angeordnet ist, daß die Strahlung von der Quelle (15) durch eine Wand der Röhre (5) und durch den Fluidstrom hindurchtritt, einem Strahlungsdetektor, der so angeordnet ist, daß er die durch die Wand der Röhre (5) und durch den Fluidstrom hindurchtretende Strahlung erfaßt, und Mitteln zum Erzeugen eines Signals, das die von dem Detektor erfaßte Strahlung darstellt, dadurch gekennzeichnet, daß der Detektor eine Halbleiterdetektorkonfiguration (16, 17, 18) umfaßt, die mit mindestens zwei Strahlungserfassungsflächen und einem zwischen der Strahlungsquelle (15) und einer ersten der Erfassungsflächen befindlichen Filter ausgestattet ist.

2. Vorrichtung nach Anspruch 1, wobei der Filter den Durchtritt der niedrigenergetischen Strahlung im wesentlichen verhindert und den Durchtritt der hochenergetischen Strahlung im wesentlichen gestattet.

3. Vorrichtung nach Anspruch 1 oder 2, wobei der Filter aus Kupfer besteht.

4. Vorrichtung nach Anspruch 1, 2 oder 3, wobei die Halbleiterdetektorkonfiguration (16, 17, 18) mit Kühlmitteln (20, 21, 22) ausgestattet ist, um die Temperatur der Halbleiterdetektorkonfiguration (16, 17, 18) zwischen 0-15°C zu halten.

5. Vorrichtung nach Anspruch 4, wobei die Halbleiterdetektorkonfiguration (16, 17, 18) mit Kühlmitteln (16, 17, 18) ausgestattet ist, um die Temperatur der Halbleiterdetektorkonfiguration zwischen 5-10°C zu halten.

6. Vorrichtung nach Anspruch 4 oder 5, wobei die Kühlmittel (20, 21, 22) in Form eines Peltierelements vorliegen.

7. Vorrichtung nach Anspruch 6, wobei die Detektorkonfiguration (16, 17, 18) direkt an den Peltierelementen (20, 21, 22) angebracht ist.

8. Vorrichtung nach einem der Ansprüche 1-7, wobei die Leitung (1) entlang eines Teils ihrer Länge einen verringerten Durchmesser aufweist und die Vorrichtung weiterhin Mittel (24) zum Messen eines Differentialdrucks in dem Fluidstrom umfaßt, der durch den Teil mit verringertem Durchmesser strömt.

9. Vorrichtung nach einem der Ansprüche 1-8, wobei die Quelle (15) und/oder die Halbleiterdetektorkonfiguration (16, 17, 18) innerhalb der Röhre (5) angeordnet ist.

10. Vorrichtung nach Anspruch 9, wobei die Quelle (15) innerhalb der Röhre (5) und die Halbleiterdetektorkonfiguration (16, 17, 18) außerhalb der Röhre (5) angeordnet ist.

11. Vorrichtung nach einem der Ansprüche 1-10, wobei die Halbleiterdetektorkonfiguration (16, 17, 18) mehrere Halbleiterdetektoren (16, 17, 18) umfaßt, die an um den Umfang der Röhre (5) herum beabstandeten Stellen angeordnet sind.

12. Vorrichtung nach einem der Ansprüche 1-11, wobei die Wand der Röhre (5) aus einem faserverstärkten Harz besteht.

13. Vorrichtung nach Anspruch 12, wobei die Wand der Röhre (5) aus einem kohlefaserverstärkten Harz besteht.

14. Vorrichtung nach Anspruch 12 oder 13, wobei das Harz aus einem Polyetherharz besteht.

15. Vorrichtung nach Anspruch 14, wobei das Polyetherharz aus einem Epoxidharz besteht.

16. Vorrichtung nach einem der Ansprüche 11-14, wobei die Wand der Röhre (5) aus einem relativ hohen Prozentsatz an Kohlefasern besteht.

## Revendications

1. Appareil pour mesurer une composition d'un fluide s'écoulant à travers une conduite d'écoulement, comprenant un tuyau (5) adapté pour être raccordé à la conduite d'écoulement d'une manière telle qu'un courant dudit fluide s'écoule à travers le tuyau (5), une source radioactive (15) arrangée de telle sorte qu'un rayonnement provenant de la source (15) passe à travers une paroi du tuyau (5) et à travers le courant de fluide, un détecteur de rayonnement arrangé de manière à détecter ledit rayonnement passant à travers la paroi du tuyau (5) et à travers le courant de fluide, et un moyen pour générer un signal représentatif dudit rayonnement détecté par le détecteur, caractérisé en ce que le détecteur est constitué d'une configuration de détecteur à solide (16, 17, 18) qui est pourvue d'au moins deux surfaces de détection de rayonnement et d'un filtre qui est situé entre la source de rayonnement (15) et une première desdites surfaces de détection.

2. Appareil selon la revendication 1, dans lequel le filtre empêche substantiellement le rayonnement à faible énergie et permet au rayonnement à haute énergie de passer à travers lui.

3. Appareil selon la revendication 1 ou 2, dans lequel le filtre comporte du cuivre.

4. Appareil selon la revendication 1, 2 ou 3, dans lequel la configuration de détecteur à solide (16, 17, 18) est pourvue de moyens de refroidissement (20, 21, 22) de manière à maintenir la température de la configuration de détecteur à solide (16, 17, 18) entre 0-15 °C.

5. Appareil selon la revendication 4, dans lequel la configuration de détecteur à solide (16, 17, 18) est pourvue de moyens de refroidissement (16, 17, 18) de manière à maintenir la température de la configuration de détecteur à solide entre 5-10 °C.

6. Appareil selon la revendication 4 ou 5, dans lequel les moyens de refroidissement (20, 21, 22) sont sous la forme d'un élément Peltier.

7. Appareil selon la revendication 6, dans lequel la configuration de détecteur (16, 17, 18) est directement attachée aux éléments Peltier (20, 21, 22).

8. Appareil selon l'une quelconque des revendications 1-7, dans lequel ladite conduite d'écoulement (1) a, le long d'une partie de sa longueur, un diamètre réduit, et l'appareil comprend en outre un moyen (24) pour mesurer une pression différentielle dans le courant de fluide s'écoulant à travers la partie de diamètre réduit.

9. Appareil selon l'une quelconque des revendications 1-8, dans lequel au moins une parmi la source (15) et la configuration de détecteur à solide (16, 17, 18) est arrangée à l'intérieur du tuyau (5).

10. Appareil selon la revendication 9, dans lequel la source (15) est arrangée à l'intérieur du tuyau (5) et la configuration de détecteur à solide (16, 17, 18) est arrangée à l'extérieur du tuyau (5).

11. Dispositif selon l'une quelconque des revendications 1-10, dans lequel la configuration de détecteur à solide (16, 17, 18) comprend une pluralité de détecteurs à solide (16, 17, 18) qui sont arrangés en des endroits espacés circonférentiellement autour du tuyau (5).

12. Appareil selon l'une quelconque des revendications 1-11, dans lequel la paroi du tuyau (5) comprend une résine renforcée par des fibres.

13. Appareil selon la revendication 12, dans lequel la paroi du tuyau (5) comprend une résine renforcée par des fibres au carbone.

14. Appareil selon la revendication 12 ou 13, dans lequel ladite résine comprend une résine polyéther.

15. Appareil selon la revendication 14, dans lequel ladite résine polyéther comprend une résine époxy.

16. Appareil selon l'une quelconque des revendications 11-14, dans lequel la paroi du tuyau (5) comprend un pourcentage de fibres de carbone relativement élevé.

FIG.1

EP 0 696 354 B1

# FIG. 2